# EUROPEAN PATENT APPLICATION

(11) **EP 2 848 128 A1**
(43) Date of publication of application: **18.03.2015**
(21) Application number: 13184270.0
(22) Date of filing: 13.09.2013
(51) Int. Cl.: A23J 1/14, A23K 1/14, A23K 1/16

(54) **New process for preparing high protein sunflower meal fraction**

(71) Applicant: Bunge Global Innovation, LLC., White Plains NY 10606 (US)
(72) Inventor: DRAGANOV, Lyubomir Krustev, 5800 PLEVEN (BG)
(74) Representative: Agasse, Stéphane

(57) **Abstract**

A process for preparing a sunflower meal fraction containing at least 50% of proteins and 10% or less of crude fibers.

Sunflower meal fraction obtained by the process thereof and its use for preparing animal feed compositions.

## Description

The present invention relates to a new process for preparing high protein sunflower meal fraction.

In animal nutrition, high quantities of proteins are needed. Proteins or protein carriers of plant origin can be used. Among the possible plant protein carriers are soy, rape, sunflowers, palm kernel, other oily fruits, lupines, pod fruits such as feed peas, field beans, and residues from starch production, such as corn gluten.

Among the aforementioned protein carriers, soy products make up about 50% of the market. The use of soybean meal indeed presents several advantage among which its high protein content, its low crude fiber content or its optimal amino acid structure. However, a large proportion of soy products are of genetically modified origin (GMO), which is not authorised everywhere, in particular in Europe for all species. Furthermore, the preparation of high protein soybean meal fractions requires heat treatments to deactivate antinutritional substances such as trypsin inhibitors, saponines and glycosids. Finally, for regions such as Europe, production of soybean meal is insufficient and importation from foreign countries is necessary, thus increasing the final costs of the product.

Alternative protein carriers would therefore be useful.

Sunflower meal is obtained from sunflower seed after oil extraction. Depending on the extraction method, the meal may be expelled or solvent extracted. Solvent extracted meal can be obtained from expeller processed meal by further extraction of oil by a solvent such as hexane. Thus prepared sunflower meal is low in energy and contains low amount of protein, generally between 25 and 28 %. On the contrary, sunflower meal contains high amount of crude fiber, generally more than 20%.

One way traditionally used to increase protein level and reduce fibers content in sunflower meal fractions is to dehull prior to extraction. Using such method allows obtaining fractions containing up to 34 to 38 % of proteins and about 15 % of fibers. Nonetheless, thus obtained fraction meal can only be used as such for feeding animals only in a limited amount. In particular, sunflower meal of such quality cannot be used as an alternative to soybean meal for feeding young birds (i.e. birds in their adolescence and growing period), mammals and fish.

In the past, processes have been disclosed for preparing enriched protein fraction of sunflower meal. Hungarian patent application HU 224456 discloses a process in which the part of the extracted grit, mainly that of sunflower seed, can be separated by crushing and sizing to a fine fraction of high protein content and to a coarse fraction containing high amount of fibers. The process disclosed in this patent application mainly consists in a fine crushing of the extracted grit to obtain two aggregations with particles of different sizes and forms, one third of the total mass of said particles having a size under 400 µm, said aggregations being then separated in one step only by sizing. Nevertheless, the protein content of thus obtained fractions does not exceed 40%.

International patent application WO-A-2013/057149 discloses a process for separating sunflower extraction meal into at least one fraction with high protein and at least one fraction of high cellulose content. The process disclosed in this patent application mainly consists in at least two protein separation steps by means of fluted rollers or hammer blow or impact mills with impact stress of the starting material in a short time cycle, followed by sieving and sifting, and collecting the sieved material. Despite it is mentioned that the protein content of thus obtained fractions could exceed 40%, no experimental result supports this assertion.

Bulgarian patent application BG 110489 discloses a method for increasing protein content in sunflower groats. The process disclosed in this patent application comprises the following steps:
- grinding large agglomerated particles to a size under 5 mm;
- sorting granulometric fractions;
- consecutive grinding of the agglomerated groat particles so as to prepare a mixture of particles enriched in protein, as well as particles with increased content of raw fibers;
- separation of the particles having high protein content from the particles having high content of raw fibers by sieving.

As a result, the process allows increasing the protein content in sunflower groats from 35% to 37% to 41% to 42%.

Nevertheless, for animal feed purpose, it would be useful to obtain sunflower meal fractions containing at least 50% of proteins and 10% or less of crude fibers so that it can be used as an alternative to soy meal in animal feed.

It has now been found a process which allows preparing sunflower meal fractions containing at least 50% of proteins and less than 10% of crude fibers in a yield that remains acceptable at an industrial scale (e.g. more than 50% yield).

Accordingly, the present invention relates to a process for preparing a sunflower meal fraction F containing at least 50% of proteins and 10% or less of crude fibers comprising the following steps:
a) preparation of a starting material by deagglomeration of a sunflower meal containing at least 30% of protein and having a moisture content of less than 12% into particles smaller than 5 mm;
b) successive sieving of obtained starting material to obtain at least the following fractions:
   ➢ fraction F-b1 in which size of particles is of from d1 to d2;
   ➢ fraction F-b2 in which size of particles is of from d3 to d1;
   ➢ fraction F-b3 in which size of particles is smaller than d3;
c) deagglomeration and successive sieving of fraction F-b1 to obtain at least the following fractions:
   ➢ fraction F-c1 in which size of particles is of from d4 to d5;
   ➢ fraction F-c2 in which size of particles is smaller than d4;
d) air sieving of fractions F-b2 and F-c1 to obtain at least the following fractions:
   ➢ fraction F-d1 in which size of particles is greater than d6;
   ➢ fraction F-d2 in which size of particles is of from d7 to d6;
   ➢ fraction F-d3 in which size of particles is smaller than d7;
e) deagglomeration and successive sieving of
   ➢ fraction F-d1 to obtain a fraction F-e1 in which size of particles is smaller than d8; and/or
   ➢ fraction F-d2 to obtain a fraction F-e2 in which size of particles is smaller than d9; and/or
   ➢ fraction F-d3 to obtain a fraction F-e3 in which size of particles is smaller than d10;
f) and mixing fractions F-b3, F-c2, F-e1 and/or F-e2 and/or F-e3 to obtain
   fraction F;
   wherein
   - d1 is of from 600 µm to 1600 µm;
   - d2 is of from 2000 µm to 5000 µm;
   - d3 is of from 150 µm to 500 µm;
   - d4 is of from 150 µm to 500 µm;
   - d5 is of from 600 µm to 1600 µm;
   - d6 is of from 800 µm to 1000 µm;
   - d7 is of from 500 µm to 750 µm;
   - d8 is of from 200 µm to 600 µm;
   - d9 is of from 200 µm to 600 µm; and
   - d10 is of from 200 µm to 600 µm.

The process according to the present invention allows preparing sunflower meal fractions containing at least 50% of proteins and less than 10% of crude fibers in a yield that remains acceptable at an industrial scale (e.g. more than 50% yield). This process is based on particles shape and size differences between protein fractions and crude fiber fractions.

In the context of the present invention "deagglomeration" means a process of breaking up into smaller sized particles some particles that have agglomerated, or aggregated, or clustered together. When applied to sunflower meal agglomerates, it allows breaking up or dispersing said agglomerates into their primary components (i.e. protein kernels and sunflower husks rich in crude fiber).

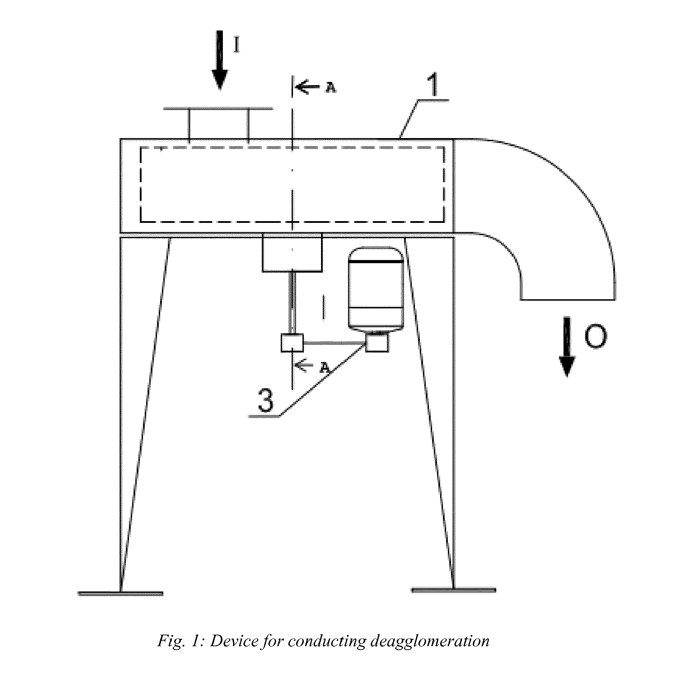

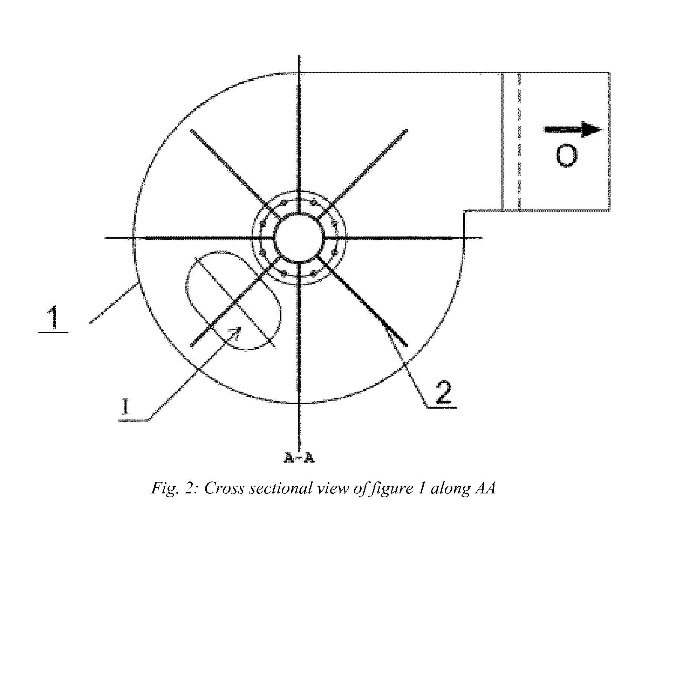

In the process according to the present invention, deagglomeration may for example be conducted using a device as represented in Figures 1 and 2.

Deagglomeration may also be conducted by using classical roller mill device. Example of suitable roller mill device that can be used in the process according to the present invention includes a roller mill containing four shaft smooth rollers turning at different speed.

In the context of the present invention, "sieving" means separation of different particles of a composition into fractions with a defined granulometry using a set of different sieves. In the process according to the present invention, sieving allows separating sunflower fractions into at least two fractions: one fraction enriched in proteins and one fraction enriched in crude fiber.

In the process according to the present invention, sieving may for example be conducted by using classical device such a plansifter ('Plansichter').

In the context of the present invention, "air sieving" means separation of specific fractions of a composition into particles of different sizes and different relative weight by using a sieve combined with fluidised air bed obtained by using a air stream blowing the particles from the bottom to the top.

In the process according to the present invention, air sieving allows separating sunflower fractions into at least two fractions: one fraction enriched in proteins (i.e. the fraction falling down at the bottom) and one fraction enriched in crude fiber (i.e. the fraction above the sieve).

Example of device for conducting air sieving according to the present invention includes "semolina-machine" used in milling industry for classifying wheat semolina.

In the context of the present invention "crude fibers" means fibers that are made up primarily of plant structural carbohydrates such as cellulose, hemicellulose and lignin.

In the context of the present invention:
- "size of particles" means the Dv90 that corresponds to the maximum particle "diameter" below which 90% of the sample volume exists. In the situation where a particle is spherical, said diameter corresponds to the diameter of said sphere. In the situation where a particle is irregular in shape and/or non-spherical, said diameter corresponds to the diameter of an imaginary sphere possessing the same weight as said particle. The particle size can be measured with any appropriate device such as an analyser sold by Retsch (e.g. Camsizer, Camsizer XT or Horiba);
- "dry weight" of a composition refers to the weight of a composition from which all water has been removed; and
- unless otherwise specified all % values correspond to percentages by weight relative to the total dry weight of the composition in question.

The process according to the present invention allows preparing a sunflower meal fraction F containing at least 50% of proteins and less than 10% of crude fibers in a yield that remains acceptable at an industrial scale. The process according to the present invention can be applied after the deoiled meal production.

In the process according to the present invention, starting material is prepared by deagglomeration of a sunflower meal containing at least 30% of protein and having a moisture content of less than 12% into particles smaller than 5 mm (step a)). Preferably, step a) of the process according to the present invention is conducted under the following conditions, taken alone or in combination:
- sunflower meal is deagglomerated using the device of Figures 1 and 2;
- sunflower meal is deagglomerated into particles smaller than 4 mm, more preferably smaller than 3 mm;
- sunflower meal contains at least 34% of protein, more preferably at least 36% of protein, even more preferably more than 40% of protein; and/or
- sunflower meal has a moisture content of less than 10%, more preferably of less than 8%.

The process according to the present invention allows preparing sunflower meal fractions F-b1 to F-b3 in which diameters of particles may vary depending on the opening size of sieves (step b)). Preferably, step b) of the process according to the present invention allows preparing fractions F-b 1 to F-b3 in which diameters of particles (d1 to d3) are chosen independently of each other or in combination as being:
- d1 is of from 650 µm to 1200 µm, more preferably of from 700 µm to 900 µm;
- d2 is of from 2500 µm to 4000 µm, more preferably of from 2750 µm to 3250 µm; and/or
- d3 is of from 150 µm to 450 µm, more preferably of from 200 µm to 400 µm.

The process according to the present invention allows preparing sunflower meal fractions F-c1 and F-c2 after deagglomeration and successive sieving of fraction F-b1, in which diameters of particles may vary depending on the opening size of sieves (step c)).

Preferably, fraction F-b1 is deagglomerated using a roller mill device containing four shaft smooth rollers turning at different speed.

Preferably, step c) of the process according to the present invention allows preparing fractions F-c1 and F-c2 in which diameters of particles (d4 and d5) are chosen independently of each other or in combination as being:
- d4 is of from 150 µm to 450 µm, more preferably of from 200 µm to 400 µm; and/or
- d5 is of from 700 µm to 1500 µm, more preferably of from 750 µm to 1400 µm.

The process according to the present invention allows preparing sunflower meal fractions F-d1 to F-d3 in which diameters of particles may vary depending on the opening size of sieves (step d)). Preferably, step d) of the process according to the present invention allows preparing fractions F-d1 to F-d3 in which diameters of particles (d6 and d7) are chosen independently of each other or in combination as being:
- d6 is of from 800 µm to 900 µm;
- d7 is of from 600 µm to 700 µm;

The process according to the present invention allows preparing sunflower meal fractions F-e1, F-e2 and/or F-e3 after deagglomeration and successive sieving of fractions F-d1, F-d2 and/or F-d3, in which diameters of particles may vary depending on the opening size of sieves (step e)).

Preferably, fractions F-d1, F-d2 and/or F-d3 are deagglomerated using a roller mill device containing four shaft smooth rollers turning at different speed.

Preferably, step e) of the process according to the present invention allows preparing fractions F-e1, F-e2 and/or F-e3 in which diameters of particles (d8 to d10) are chosen independently of each other or in combination as being:
- d8 is of from 200 µm to 550 µm, more preferably of from 250 µm to 550 µm;
- d9 is of from 200 µm to 550 µm, more preferably of from 250 µm to 550 µm; and/or
- d10 is of from 200 µm to 550 µm, more preferably of from 250 µm to 550 µm.

Figure 1 illustrates an example of specific device for conducting deagglomeration of sunflower meal agglomerates. Figure 2 is a cross sectional view along AA of Figure 1. Agglomerates are introduced via the upper part of the device (inlet) and are collided with the inner wall of the housing (1) under a set of high speed rotating plates (2) powered by a drive unit (3). Agglomerates are thus broken thanks to the shear force and collected (outlet).

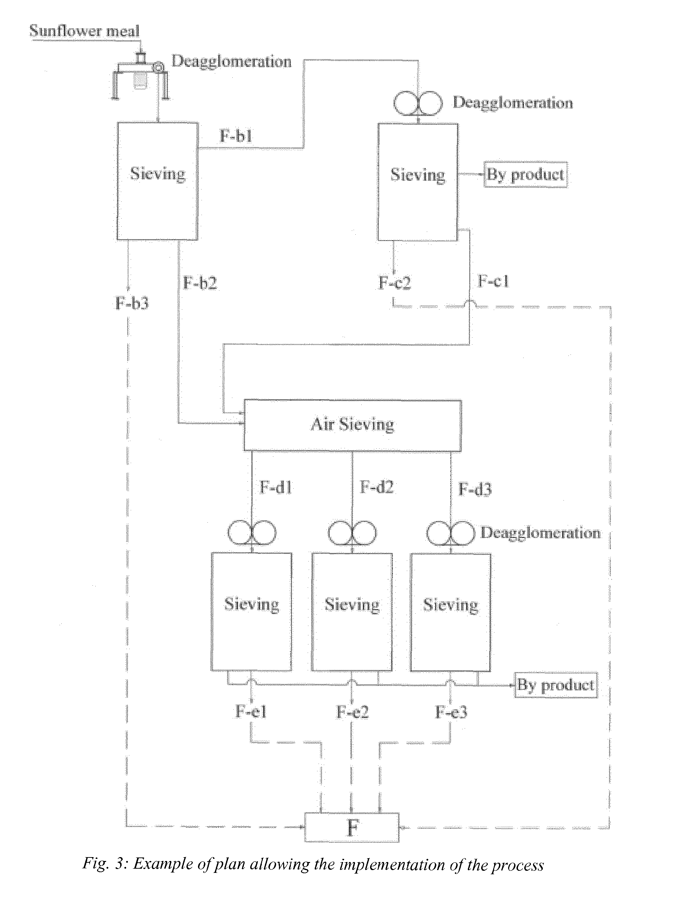

Figure 3 illustrates an example of plan allowing the implementation of the process according to the present invention. In this figure, "by products" corresponds to subfractions enriched in crude fibers that are not used for constituting fraction F.

The present invention relates to a process for preparing a sunflower meal fraction F containing at least 50% of proteins and less than 10% of crude fibers. Thus obtained sunflower meal fraction is novel. Accordingly, the present invention also relates to a sunflower meal fraction containing at least 50% of proteins and less than 10% of crude fibers.

Preferably, sunflower meal fraction according to the present invention presents the following characteristics, taken alone or in combination:
- sunflower meal fraction at least 52% of proteins. More preferably, sunflower meal fraction contains at least 54% of proteins;
- sunflower meal fraction contains less than 9% of crude fibers. More preferably, sunflower meal fraction contains less than 8% of crude fibers. Even more preferably sunflower meal fraction contains less than 7% of crude fibers;
- diameters of particles of sunflower meal fraction is of from 200 µm to 600 µm.

Sunflower fraction according to the present invention is particularly useful for animal feed purpose and for replacing soybean meal. Accordingly, the present invention also relates to animal feed composition comprising a sunflower meal fraction as defined above. The present invention also relates to the use of a sunflower meal fraction as defined above for feeding animal, in particular poultry, aquaculture and pork.

The present invention will now be illustrated in a non-limiting manner by the following example.

### Example of process according to the present invention

### Raw material

23440 kg of a dehulled sunflower meal containing 37.47% of crude protein and 17.61% of crude fibre and having a moisture content of 9% was used as a raw material.

### Process

### Step a)

Above raw material was stored in concrete cells. It was introduced in a device according to Figure 1 by a screw conveyor where the first deagglomeration took place in a breaker operating at a rotation speed of rotating plates of 49 m/s so as to reduce size of particles below 3 mm.

### Step b)

By using a vertical conveyor elevator, the obtained fraction was weighted on scales and were introduced (using a screw conveyor) into a 'Plansichter' comprising about 20 sieves.

Obtained particles were screened so that particles remaining bigger than 3mm were reintroduced into step a).

Particles smaller than 3 mm were separated into 3 fractions:
- particles bigger than 800 µm (fraction Fb-1);
- particles smaller than 800 µm but bigger than 375 µm (fraction Fb-2);
- particles smaller than 375 µm (fraction Fb-3).

### Step c)

Above fraction Fb-1 was introduced into a roller mill with an operated pressure of 6 Bar and a ratio of transmission of 1:2.5 between the 2 shafts taking care of preventing major hacking of sunflower meal shells and get the maximum deagglomeration and separation between protein and fibres.

Obtained particles were sieved using a 'Plansichter' as in step b) and separated into 3 fractions:
- particles bigger than 800 µm (fraction Fc-1) were ;
- particles smaller than 800 µm but bigger than 280 µm (fraction Fc-2);
- particles smaller than 280 µm (fraction Fc-3).

Fraction Fc-1 was reintroduced into a roller mill with an operated pressure of 6 Bar and a ratio of transmission of 1:2.5 taking care of preventing major hacking of sunflower meal shells and get the maximum deagglomeration and separation between protein and fibres.

Obtained particles were sieved using a Plansichter as in step b) and thus separated into 3 fractions:
- particles bigger than 800 µm (fraction Fc-4) were ;
- particles smaller than 800 µm but bigger than 375 µm (fraction Fc-5);
- particles smaller than 375 µm (fraction Fc-6).

### Step d)

Above fractions Fb-2, Fc-2 and Fc-5 were treated by an air sieving in a "semolina-machine". An air flow of 55 m³/min was applied.

Particles were thus separated into 3 fractions:
- particles bigger than 850 µm (fraction Fd-1);
- particles smaller than 850 µm but bigger than 800 µm (fraction Fd-2);
- particles smaller than 800 µm (fraction Fd-3).

### Step e)

Above fraction Fd-1 was introduced into to a roller miller for a further deagglomeration.

Obtained particles were sieved using a 'Plansichter' as in step b) and thus separated into 3 fractions:
- particles bigger than 530 µm (fraction Fe-1)
- particles smaller than 530 µm but bigger than 375 µm (fraction Fe-2)
- particles smaller than 375 µm (fraction Fe-3)

Above fraction Fd-2 was introduced into to a roller miller for a further deagglomeration.

Obtained particles were sieved using a 'Plansichter' as in step b) and thus separated into 3 fractions:
- particles bigger than 800 µm (fraction Fe-4)
- particles smaller than 800 µm but bigger than 355 µm (fraction Fe-5)
- particles smaller than 355 µm (fraction Fe-6)

Above fraction Fd-3 was introduced into to a roller miller for a further deagglomeration.

Obtained particles were sieved using a 'Plansichter' as in step b) and thus separated into 3 fractions:
- particles bigger than 800 µm (fraction Fe-7)
- particles smaller than 800 µm but bigger than 355 µm (fraction Fe-8)
- particles smaller than 355 µm (fraction Fe-9)

### Final products

Three final fractions were finally obtained:
- fraction C1 made of Fb-3, Fc-3, Fe-3, Fe-6 and Fe-9;
- fraction C2 made of Fe-2, Fe-5 and Fe-8; and
- fraction C3 made of Fc-4, Fe-1, Fe-4 and Fe-7.

| **Fraction** | **Dry matter** | **Protein in Dry** | **Fibre in Dry** | **Yield** |
|---|---|---|---|---|
| C1 | 91.70% | 48.00-50.00 % | 8.2% | 15600 Tons |
| C2 | 91.50% | 23.80 % | 33.81 % | 4800 Tons |
| C3 | 91.20% | 15.68 % | 40.70 % | 2534 Tons |

## Claims

1. A process for preparing a sunflower meal fraction F containing at least 50% of proteins and 10% or less of crude fibers comprising the following steps:
a) preparation of a starting material by deagglomeration of a sunflower meal containing at least 30% of protein and having a moisture content of less than 12% into particles smaller than 5 mm;
b) successive sieving of obtained starting material to obtain at least the following fractions:
➢ fraction F-b1 in which size of particles is of from d1 to d2;
➢ fraction F-b2 in which size of particles is of from d3 to d1; and
➢ fraction F-b3 in which size of particles is smaller than d3;
c) deagglomeration and successive sieving of fraction F-b1 to obtain at least the following fractions:
➢ fraction F-c1 in which size of particles is of from d4 to d5; and
➢ fraction F-c2 in which size of particles is smaller than d4;
d) air sieving of fractions F-b2 and F-c1 to obtain at least the following fractions:
➢ fraction F-d1 in which size of particles is greater than d6;
➢ fraction F-d2 in which size of particles is of from d7 to d6; and
➢ fraction F-d3 in which size of particles is smaller than d7;
e) deagglomeration and successive sieving of
➢ fraction F-d1 to obtain a fraction F-e1 in which size of particles is smaller than d8; and/or
➢ fraction F-d2 to obtain a fraction F-e2 in which size of particles is smaller than d9; and/or
➢ fraction F-d3 to obtain a fraction F-e3 in which size of particles is smaller than d10;
f) and mixing fractions F-b3, F-c2, F-e1 and/or F-e2 and/or F-e3 to obtain
fraction F;
wherein
- d1 is of from 600 µm to 1600 µm;
- d2 is of from 2000 µm to 5000 µm;
- d3 is of from 150 µm to 500 µm;
- d4 is of from 150 µm to 500 µm;
- d5 is of from 600 µm to 1600 µm;
- d6 is of from 800 µm to 1000 µm;
- d7 is of from 500 µm to 750 µm;
- d8 is of from 200 µm to 600 µm;
- d9 is of from 200 µm to 600 µm; and
- d10 is of from 200 µm to 600 µm.

2. A process according to claim 1, **characterised in that** the sunflower meal is deagglomerated into particle smaller than 3 mm.

3. A process according to claim 1 or 2, **characterised in that** the sunflower meal has a moisture content of less than 10%.

4. A process according to any of claims 1 to 3, **characterised in that** sunflower meal contains at least 34% of protein

5. A process according to any of claims 1 to 4, **characterised in that**:
- d1 is of from 650 µm to 1200 µm;
- d2 is of from 2500 µm to 4000 µm; and
- d3 is of from 150 µm to 450 µm.

6. A process according to any of claims 1 to 5, **characterised in that**:
- d4 is of from 150 µm to 450 µm; and
- d5 is of from 700 µm to 1500 µm.

7. A process according to any of claims 1 to 6, **characterised in that**:
- d6 is of from 800 µm to 900 µm; and
- d7 is of from 600 µm to 700 µm.

8. A process according to any of claims 1 to 7, **characterised in that** d8 is of from 200 µm to 550 µm.

9. A process according to any of claims 1 to 8, **characterised in that** d9 is of from 200 µm to 550 µm.

10. A process according to any of claims 1 to 9, **characterised in that** d10 is of from 200 µm to 550 µm.

11. Sunflower meal fraction obtained by process according to claim 1.

12. Sunflower meal according to claim 11, **characterised in that** it contains at least 52% of proteins.

13. Sunflower meal according to claim 11 or 12, **characterised in that** it contains less than 8% of crude fibers.

14. Sunflower meal according to any of claims 11 to 13, **characterised in that** diameters of particles said fraction is of from 200 µm to 600 µm.

15. Animal feed composition comprising a sunflower meal fraction according to any of claims 11 to 14.

16. Use of a sunflower meal fraction according to any of claims 11 to 14 for feeding animal.
